# EUROPÄISCHE PATENTSCHRIFT

(11) **EP 1 068 979 B1**
(45) Veröffentlichungstag und Bekanntmachung des Hinweises auf die Patenterteilung: **18.05.2005**
(21) Anmeldenummer: 00109490.3
(22) Anmeldetag: 04.05.2000
(51) Int. Cl.: B60K 13/04

(54) **Abgasanlage**
Exhaust system
Pot d'échappement

(30) Priorität: 10.07.1999 DE 19932349
(43) Veröffentlichungstag der Anmeldung: 17.01.2001
(73) Patentinhaber: Dr.Ing. h.c.F. Porsche Aktiengesellschaft, 70435 Stuttgart (DE)
(72) Erfinder: Weimert, Günter, 75323 Bad Wildbad (DE); Mann, Harald, 71642 Ludwigsburg (DE); Schorn, Jürgen, 71277 Rutesheim (DE); Wessels, Michael, 71665 Vaihingen/Enz (DE)

(56) Entgegenhaltungen:
- US-A- 3 746 127
- US-A- 4 074 525
- US-A- 4 339 919
- US-A- 5 823 286

## Beschreibung

Die Erfindung bezieht sich auf eine Abgasanlage für ein durch Getriebe und Brennkraftmaschine gebildetes Triebwerk nach dem Oberbegriff des Patentanspruchs 1.

Die US 5,823,286 befasst sich mit einer Abgasanlage für ein durch Getriebe und Brennkraftmaschine gebildetes Triebwerk, das in einen Aufbau eines Kraftfahrzeugs eingebaut ist. Die Abgasanlage besitzt ein als länglichen Rohrkörper ausgebildeten Schalldämpfer, ist mit der Brennkraftmaschine verbunden und unter Vermittlung elastischer Elemente gelagert.

Aus der US-PS 4,074,525 ist es bekannt, ein Abgasrohr unter Vermittlung eines elastischen Abschnitts mit einer Auslaßvorrichtung einer Brennkraftmaschine zu verbinden. Das Abgasrohr ist außerdem mit einer elastischen Stütze an den Boden eines Kraftfahrzeug-Aufbaus angeschlossen.

Die US-PS 4,339,919 behandelt einen Schalldämpfer, der einerseits über ein Abgasrohr mit einer Brennkraftmaschine und andererseits mittels einer Tragvorrichtung an einem Rahmenteil gehalten ist. Dabei ist zwischen Tragvorrichtung und Rahmenteil ein nachgiebiges Lager angeordnet.

In der DE-Sonderausgabe ATZ Automobiltechnische Zeitschrift und MTZ Motortechnische Zeitschrift, 1997, Seite 81 wird eine Abgasanlage einer Brennkraftmaschine gezeigt, wobei ein Schalldämpfer der Abgasanlage an einem Getriebe der Brennkraftmaschine befestigt ist.

Schließlich geht aus der DE 972 483 C1 eine Auspuffanlage für eine Brennkraftmaschine mit mehreren Zylindern hervor, die in gegenüberliegende Zylinderreihen integriert sind. Die Auspuffanlage umfasst ein langgestrecktes zylindrisches Gefäß, das unter Vermittlung einer Membrandose mit der elastisch aufgehängten Brennkraftmaschine verbunden ist.

Aufgabe der Erfindung ist es, eine Abgasanlage einer Brennkraftmaschine so aufzuhängen, daß sie bei guter Lagerung ein günstiges Schwingungsverhalten, insbesondere bei niedrigen Drehzahlen z.B. Leerlauf aufweist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß durch die besonders gestaltete Aufhängungseinrichtung die Abgasanlage, vor allem ein Schalldämpfer von letzterer, schwingungstechnisch optimiert ist, dergestalt, daß das Leerlaufschütteln zumindest reduziert ist. Dank dieser Aufhängungseinrichtung kann die Leerlaufdrehzahl der Brennkraftmaschine abgesenkt werden, was sich vorteilhaft auf den Kraftstoffverbrauch, gegebenenfalls auch die Abgasemission der besagten Brennkraftmaschine auswirkt. Die erste Stützvorrichtung und die zweite Stützvorrichtung umfassen übersichtlich konstruierte Bauteile, die nicht nur leicht herstellbar sind, sondern sich auch gut am Schalldämpfer anbauen bzw. mit der Tragkonsole verbinden lassen. Schließlich wird mit dem zumindest Zugbelastungen aufnehmenden Verbindungsglied eine zusätzliche Ankoppelung des Schalldämpfers erreicht, was einen positiven Einfluß auf das Schwingungsverhalten bewirkt.

In der Zeichnung wird ein Ausführungsbeispiel der Erfindung gezeigt, das nachstehend näher beschrieben wird.

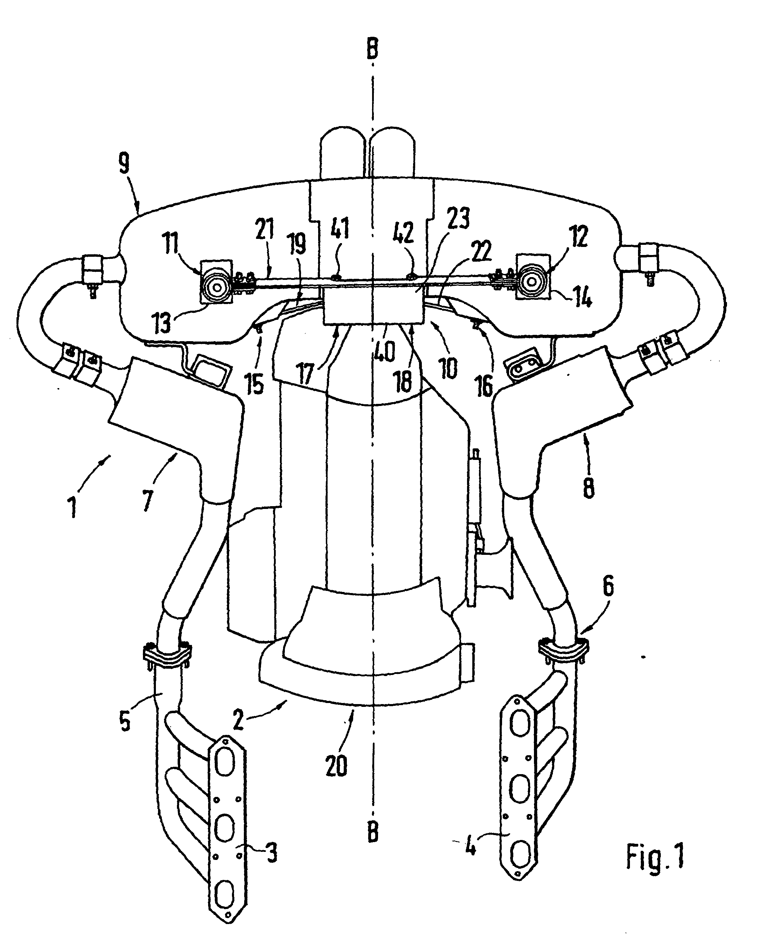

Es zeigen
- Fig. 1: eine Ansicht von oben auf eine Abgasanlage einer Brennkraftmaschine, eingebaut in ein Kraftfahrzeug;

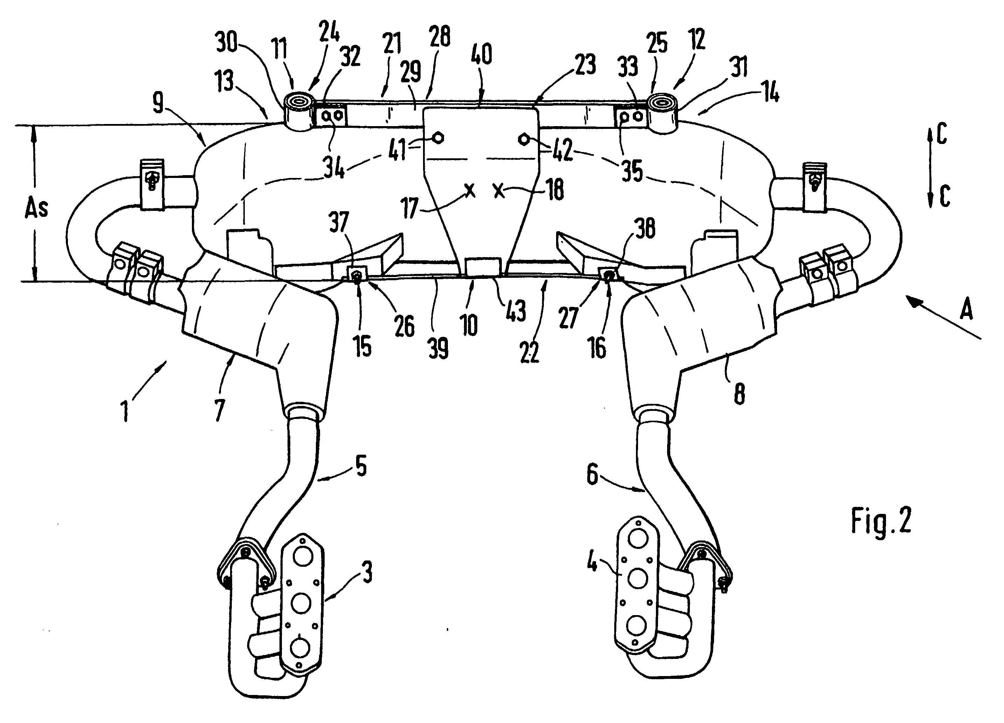

- Fig. 2: eine Schrägansicht von oben auf die Abgasanlage der Fig. 1;

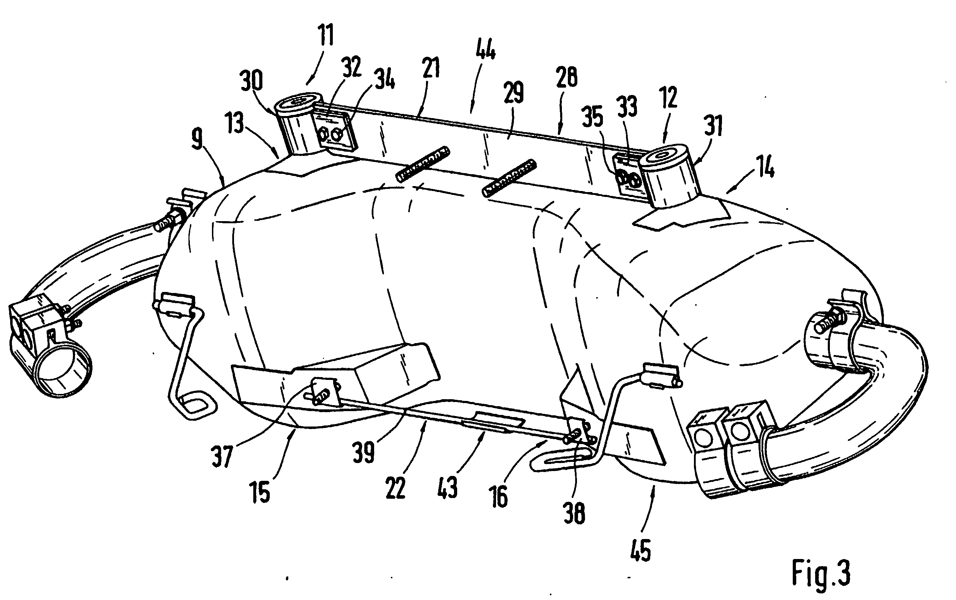

- Fig. 3: eine Schrägansicht der Fig. 1 etwa in Richtung Pfeilrichtung A der Fig. 2.

Eine Abgasanlage 1 ist zur Führung von Abgasen einer Brennkraftmaschine ausgebildet, die mit einem Getriebe 2 zu einem Triebwerk verblockt ist und in ein einen Aufbau aufweisendes Kraftfahrzeug eingebaut ist. Für die folgenden Erläuterungen sind im wesentlichen die Abgasanlage 1 und das Getriebe 2 relevant, so daß die zeichnerische Darstellung der Brennkraftmaschine und des Kraftfahrzeugs mit Aufbau entfallen kann. Die Abgasanlage 1 ist mit Auslaßvorrichtungen 3, 4 an Zylinderköpfe gegenüberliegender Zylinderreihen Boxerbauart der Brennkraftmaschine angeschlossen und über definiert geformte Abgasleitungen 5, 6, die mit Katalysatoren 7, 8 versehen sind, mit einem Schalldämpfer 9 verbunden. Der durch einen länglichen Körper mit etwa rechteckigem Querschnitt dargestellte Schalldämpfer 9 erstreckt sich quer zu einer Längsmittelebene B-B des Kraftfahrzeugs, die auch die grundsätzliche Verlaufsrichtung für das Getriebe 2 und die Brennkraftmaschine bildet.

Der Schalldämpfer 9 ist mit einer Aufhängungsvorrichtung 10 versehen, die zumindest teilweise unter Vermittlung von elastischen Elementen 11, 12 an verschiedenen Wandungsbereichen 13, 14 und 15, 16 des Schalldämpfers 9 angreift. Die Aufhängungsvorrichtung 10 ist mit Schrauben 17, 18 am Getriebe 2 gehalten, das mit einem ersten freien Ende 19 benachbart zum Schalldämpfer 9 verläuft; ein zweites Ende 20 des Getriebe 2 schließt unmittelbar an die Brennkraftmaschine an.

Die Aufhängungseinrichtung umfaßt eine erste Stützvorrichtung 21 und eine zweite Stützvorrichtung 22, die mit Abstand As zueinander am Schalldämpfer 9 angeordnet sind. Beide Stützvorrichtungen 21 und 22 sind untereinander über eine Tragkonsole 23 verbunden. Dabei ist die erste Stützvorrichtung 21 unter Vermittlung von Befestigungsgliedern 24, 25 an den Schalldämpfer 9 herangeführt; die zweite Stützvorrichtung 21 unter Vermittlung von Befestigungsgliedern 26, 27.

In die erste Stützvorrichtung 21 sind die elastischen Elemente 11, 12 in die Befestigungsglieder 24, 25 integriert, die beabstandet zueinander angeordnet und an die Wandungsbereiche 13, 14 des Schalldämpfers 9 herangeführt sind. Zwischen den elastischen Elementen 11, 12 erstreckt sich eine horizontale, blattfederartige Strebe 28, deren längere Seite 29 in Fahrzeughöhenrichtung C-C ausgerichtet ist. Jedes elastische Element z.B. 11 ist als zylindrische Hülsenschubfeder ausgebildet, deren Auslegung durch Einsatz iterativer und/oder rechnerischer Maßnahmen erfolgt. Außerdem sind die elastischen Elemente 11, 12 von schlauchklemmenartigen Halteteilen 30, 31 umgeben, die Befestigungsflansche 32, 33 aufweisen. Die Befestigungsflansche 32, 33 nehmen die Strebe 28 auf, und zwar unter Vermittlung von Schrauben 34 und 35. Die zweite Stützvorrichtung 22 weist die durch Halter 37, 38 gebildete Befestigungsglieder 26, 27 auf, die an die Wandungsbereiche 15, 16 des Schalldämpfers 9 angeschlossen sind. Die Halter 37, 38 stehen mit einem Verbindungsglied 39 in Wirkverbindung, das ein Seil sein kann und dann lediglich Zugbelastungen aufnimmt. Denkbar ist aber auch das Verbindungsglied 39 als Stab auszubilden, der sowohl Zugbelastungen als auch Druckbelastungen überträgt.

Die Tragkonsole 22 ist eine formsteife Platte 40, die mit der blattfederartigen Strebe 28 mittels Schrauben 41, 42 und mit dem Verbindungsglied 39 unter Zwischenschaltung einer Klemmvorrichtung 43 verbunden ist. Außerdem ist die Tragkonsole 22 übe die Schrauben 17, 18 mit dem ersten Ende 18 des Getriebes 2 verbunden.

Schließlich weist der Schalldämpfer 9 der Abgasanlage eine Oberseite 44 und eine Unterseite 45 auf, und die erste Stützvorrichtung 20 und die zweite Stützvorrichtung 21 verlaufen benachbart dieser Oberseite 44 bzw. dieser Unterseite 45 des besagten Schalldämpfers.

## Patentansprüche

1. Abgasanlage (1) für ein durch Getriebe (2) und Brennkraftmaschine gebildetes Triebwerk, eingebaut in ein einen Aufbau besitzendes Kraftfahrzeug, wobei die einen als länglichen Rohrkörper ausgebildeten Schalldämpfer (9) aufweisende Abgasanlage (1) mit der Brennkraftmaschine verbunden und unter Vermittlung elastischer Elemente (11, 12) gelagert ist, wobei an dem Schalldämpfer (9) eine an verschiedenen Wandungsbereichen (13, 14 und 15, 16) des Schalldämpfers (9) angreifende, die elastischen Elemente (11, 12) umfassende Aufhängungseinrichtung (10) vorgesehen ist, die mittels Befestigungsgliedern (17, 18) und vorzugsweise unabhängig vom Aufbau am Getriebe (2) und/oder der Brennkraftmaschine des Triebwerks gehalten ist, **dadurch gekennzeichnet, dass** die Aufhängungseinrichtung (10) mit einer ersten Stützvorrichtung (21) und einer zweiten Stützvorrichtung (22) versehen ist, die mit Abstand (As) zueinander am Schalldämpfer (9) angeordnet und untereinander über eine Tragkonsole (23) verbunden sind, wobei die elastischen Elemente (11, 12) zwischen der ersten Stützvorrichtung (21) und dem Schalldämpfer (9) angebracht sind und jede Stützvorrichtung (21 und 22) mit einem oder mehreren Befestigungsgliedern (24, 25 und 26, 27) an den Schalldämpfer (9) herangeführt ist.

2. Abgasanlage nach Anspruch 1, **dadurch gekennzeichnet, dass** die erste Stützvorrichtung (21) zwei beabstandete als elastische Elemente (11, 12) ausgebildete Befestigungsglieder (24, 25) aufweist, die mit einer blattfederartigen Strebe (28) verbunden sind.

3. Abgasanlage nach Anspruch 2, **dadurch gekennzeichnet, dass** jedes elastische Element (11, 12) der ersten Stützvorrichtung (21) nach Art einer zylindrischen Hülsenschubfeder ausgebildet ist.

4. Abgasanlage nach den Ansprüche 2 und 3, **dadurch gekennzeichnet, dass** die elastischen Elemente (11, 12) der ersten Stützvorrichtung (21 ) mit schlauchklemmenartigen Halteteilen (30, 31) versehen sind, wobei zwischen Befestigungsflanschen (32, 33) dieser Halteteile (30, 31) die Strebe (28) eingesetzt und unter Vermittlung von Schrauben (34, 35) in Lage gehalten wird.

5. Abgasanlage nach Anspruch 1, **dadurch gekennzeichnet, dass** die zweite Stützvorrichtung (22) als Halter (37, 38) ausgebildete Befestigungsglieder (26, 27) aufweist, die mit einem zumindest Zugbelastungen aufnehmenden Verbindungsglied (39) in Wirkverbindung stehen.

6. Abgasanlage nach Anspruch 5, **dadurch gekennzeichnet, dass** das Verbindungsglied (39) ein Seil ist.

7. Abgasanlage nach Anspruch 5, **dadurch gekennzeichnet, dass** das Verbindungsglied (39) ein Zug und Druckbelastungen aufnehmender Stab ist.

8. Abgasanlage nach Anspruch 1, **dadurch gekennzeichnet, dass** die Tragkonsole (23) eine formsteife Platte ist, die unter Vermittlung von Schrauben (17, 18) mit dem Getriebe (2) verbunden ist.

9. Abgasanlage mit einem länglichen, eine Oberseite und eine Unterseite aufweisenden Schalldämpfer nach einem oder mehreren der vorangehenden Ansprüche, **dadurch gekennzeichnet, dass** die erste Stützvorrichtung (21) benachbart der Oberseite (44) und die zweite Stützvorrichtung (22) benachbart der Unterseite (45) verlaufen.

## Claims

1. An exhaust system (1) for a power unit formed by a transmission (2) and an internal-combustion engine and installed in a motor vehicle with a body, wherein the exhaust system (1), which has a silencer (9) formed as an elongate tubular body, is connected to the internal-combustion engine and is mounted with the interposition of resilient elements (11, 12), wherein a suspension arrangement (10), which comprises the resilient elements (11, 12) and engages various wall regions (13, 14 and 15, 16) of the silencer (9), is provided on the silencer (9) and is held on the transmission (2) and/or the internal-combustion engine of the power unit by means of fastening members (17, 18), preferably independently of the body, **characterised in that** the suspension arrangement (10) is provided with a first supporting device (21) and a second supporting device (22), which supporting devices are arranged on the silencer (9) with mutual spacing (As) and are connected to one another by means of a supporting bracket (23), wherein the resilient elements (11, 12) are mounted between the first supporting device (21) and the silencer (9), and each supporting device (21 and 22) is attached to the silencer (9) by means of one or more fastening members (24, 25 and 26, 27).

2. An exhaust system according to claim 1, **characterised in that** the first supporting device (21) has two spaced fastening members (24, 25) formed as resilient elements (11, 12) and connected to a leaf spring-type strut (28).

3. An exhaust system according to claim 2, **characterised in that** each resilient element (11, 12) of the first supporting device (21) is formed in the manner of a cylindrical, sleeve-type thrust spring.

4. An exhaust system according to claims 2 and 3, **characterised in that** the resilient elements (11, 12) of the first supporting device (21) are provided with hose clip-type holding parts (30, 31), wherein the strut (28) is inserted between fastening flanges (32, 33) of these holding parts (30, 31) and is held in position by means of screws (34, 35).

5. An exhaust system according to claim 1, **characterised in that** the second supporting device (22) has fastening members (26, 27) which are formed as holders (37, 38) and are operatively connected to a connecting member (39) absorbing at least tensile loads.

6. An exhaust system according to claim 5, **characterised in that** the connecting member (39) is a cable.

7. An exhaust system according to claim 5, **characterised in that** the connecting member (39) is a rod which absorbs tensile and compressive loads.

8. An exhaust system according to claim 1, **characterised in that** the supporting bracket (23) is a rigid plate connected to the transmission (2) by means of screws (17, 18).

9. An exhaust system with an elongate silencer having an upper side and an underside, according to one or more of the preceding claims, **characterised in that** the first supporting device (21) extends adjacent to the upper side (44), and the second supporting device (22) extends adjacent to the underside (45).

## Revendications

1. Système d'échappement des gaz (1) pour un groupe moteur constitué d'une transmission (2) et d'un moteur à combustion interne, monté dans un véhicule automobile présentant une carrosserie, le système d'échappement des gaz (1) comportant un silencieux (9), réalisé sous la forme d'un corps tubulaire allongé, étant relié au moteur à combustion interne et supporté par l'intermédiaire d'éléments élastiques (11, 12), un dispositif de suspension (10), comprenant les éléments élastiques (11, 12) et agissant dans différentes zones (13, 14 et 15, 16) de la paroi du silencieux (9), étant prévu sur le silencieux (9), lequel dispositif de suspension est maintenu au moyen d'organes de fixation (17, 18) et de préférence indépendamment de la carrosserie, sur la transmission (2) et/ou le moteur à combustion interne du groupe moteur, **caractérisé en ce que** le dispositif de suspension (10) est pourvu d'un premier dispositif d'appui (21) et d'un deuxième dispositif d'appui (22) qui sont disposés à distance (As) l'un de l'autre sur le silencieux (9) et sont reliés entre eux par une console de support (23), les éléments élastiques (11, 12) étant placés entre le premier dispositif d'appui (21) et le silencieux (9), et chaque dispositif d'appui (21 et 22) étant relié au silencieux (9) par un ou plusieurs organes de fixation (24, 24 et 26, 27).

2. Système d'échappement des gaz selon la revendication 1, **caractérisé en ce que** le premier dispositif d'appui (21) comporte deux organes de fixation (24, 25) espacés, réalisés comme éléments élastiques (11, 12), et qui sont reliés à une entretoise (28) de type ressort à lames.

3. Système d'échappement des gaz selon la revendication 2, **caractérisé en ce que** chaque élément élastique (11, 12) du premier dispositif d'appui (21) est réalisé à la manière d'un ressort à douille cylindrique.

4. Système d'échappement des gaz selon les revendications 2 et 3, **caractérisé en ce que** les éléments élastiques (11, 12) du premier dispositif d'appui (21) sont pourvus d'éléments de retenue (30, 31) de type pince pour tuyau, l'entretoise (28) étant insérée entre des brides de fixation (32, 33) de ces éléments de retenue (30, 31) et immobilisée par l'intermédiaire de vis (34, 35).

5. Système d'échappement des gaz selon la revendication 1, **caractérisé en ce que** le deuxième dispositif d'appui (22) comporte des organes de fixation (26, 27) réalisés comme supports (37, 38) qui sont en liaison active avec un organe de liaison (39) absorbant au moins les contraintes de traction.

6. Système d'échappement des gaz selon la revendication 5, **caractérisé en ce que** l'organe de liaison (39) est un câble.

7. Système d'échappement des gaz selon la revendication 5, **caractérisé en ce que** l'organe de liaison (39) est une barre absorbant les contraintes de traction et de pression.

8. Système d'échappement des gaz selon la revendication 1, **caractérisé en ce que** la console de support (23) est une plaque indéformable qui est reliée à la transmission (2) par l'intermédiaire de vis (17, 18).

9. Système d'échappement des gaz avec un silencieux allongé, présentant une face supérieure et une face inférieure selon une ou plusieurs des revendications précédentes, **caractérisé en ce que** le premier dispositif d'appui (21) s'étend au voisinage de la face supérieure (44) et le deuxième dispositif d'appui (22) au voisinage de la face inférieure (45).
